# EUROPEAN PATENT SPECIFICATION

(11) **EP 2 337 325 B1**
(45) Date of publication and mention of the grant of the patent: **30.07.2014**
(21) Application number: 09179959.3
(22) Date of filing: 18.12.2009
(51) Int. Cl.: H04M 3/493, H04M 3/533, H04W 8/18

(54) **Accessing a data item stored in an unavailable mobile communication device**
Zugreifen auf ein in einer nicht verfügbaren mobilen Kommunikationsvorrichtung gespeichertes Datenelement
Accès à des données stockées dans un dispositif de communications mobile non disponible

(43) Date of publication of application: 22.06.2011
(73) Proprietor: BlackBerry Limited, Waterloo, ON N2K 0A7 (CA)
(72) Inventor: Walker, David Ryan, Waterloo Ontario N2L 3W8 (CA); Pasquero, Jerome, Waterloo Ontario N2L 3W8 (CA)
(74) Representative: Moore, Barry

(56) References cited:
- EP-A2- 1 503 604
- WO-A1-01/50720
- US-A1- 2003 059 000
- US-A1- 2006 083 357

## Description

The present disclosure relates generally to accessing data items stored in a database that can mirror, or be synchronized with, the contents of a mobile communication device. More particularly, the present disclosure relates to the access to data items from the database by a using a telephone device other that the mobile communication device; for example, by using another mobile communication device, a landline telephone, or a voice over IP (VoIP) telephone.

Users of mobile communication devices such as cell phones and smart phones, increasingly rely on the devices in question as the only means for storing and keeping data items. For the purpose of the present disclosure, data items can include, amongst others, contact data such as, for example, telephone numbers, email addresses, postal addresses; memos; calendars; task lists; emails; etc.

In the event where a user's mobile communication device is lost, unusable, or otherwise unavailable for use, such as, for example, when the device's battery dies, the user is left without the possibility of reaching his contacts, or accessing other data items stored in his device, unless he has memorized the contact data and the other data items.

U.S. Patent Application Publication No. 2006/083357 discloses a system that concurrently provides multiple user interface mechanisms, which allow a caller using a telephonic communication component from accessing information stored on a server connected to the system. The system, referred to as a unified messaging system, can access the information through a dual tone multi-frequency interface and/or a voice interface. The information stored with the server can be synchronized with various clients. One such client can be a smart phone. However, in order to retrieve information stored on the server, e.g., a contact telephone number, the caller is required to call the enterprise (company) to which the server is connected.

Therefore, improvements in methods for retrieving data items from an unavailable mobile communication device are desirable.

### GENERAL

Generally, the present disclosure relates to a method and system for an owner of an unavailable mobile communication device to access data items stored on the unavailable device by using another telephone (e.g., another mobile communication device, landline telephone, or VoIP telephone) to access a database that is synchronized with the mobile communication device in question, that is, a database that includes a copy of the data items.

In a first aspect, there may be provided a method to access a data item stored in a database, the database being operationally connected to a server, the server being operationally connected to a wireless network, the method comprising, at the server: receiving a call for an unavailable mobile communication device from a telephone, subsequent a failed attempt from the wireless network to establish communication between the telephone and the unavailable mobile communication device, the data item stored in the database being a copy of a communication device data item stored in the unavailable mobile communication device; sending to the telephone at least one data item identification option; receiving from the telephone, an identification of the data item; and in response to the identification of the data item, sending to the telephone at least one data item action option. The at least one data item action can include one of: sending the data item from the database to the telephone; sending the data item from the database to a telephone number; and sending the data item from the database to an email address.

Sending the data item from the database to the telephone can comprise one of spelling the data item and speaking the data item. Sending the data item from the database to the telephone can also comprise sending the data item as text to be displayed on the telephone.

Sending the data item from the database to a telephone number or to an email address can be preceded by, at the server, receiving the telephone number or the email address from the telephone.

Sending the data item from the database to a telephone number or to an email address can be preceded by, at the server, retrieving the telephone number or the email address from the database.

Sending to the telephone at least one data item identification option can be preceded by, at the server: in response to the call, sending to the telephone a data item access option; and receiving from the telephone, a selection of the data item access option.

Sending to the telephone the data item access option can comprise sending at least one spoken data item access option selectable, at the telephone, through at least one of a pre-determined telephone key sequence and a voice command.

Sending to the telephone the at least one data item identification option can comprise sending at least one spoken data item identification option selectable, at the telephone, through at least one of a pre-determined telephone key sequence and a voice command.

The data item can be one of a contact name, a telephone number, an email address, a memo, a calendar event, and a task list.

The data item can a telephone number and the at least one data item action option can further comprise, at the server, dialing the telephone number.

Sending to the telephone at least one data item identification option can be preceded by, at the server, sending to the telephone a user identification request to identify a user having permission to access the data item; receiving a response to the user identification request; and determining the response to be correct.

In a second aspect of the present disclosure, there may be provided tangible computer readable medium having recorded thereon statements and instructions for execution by a computer of a method according to the first aspect of the present disclosure.

In a third aspect of the present disclosure, there may be provided a server operationally connected to a database and to a wireless network, the database containing a data item, the server comprising: a transceiver operable to: receive a call for an unavailable mobile communication device from a telephone subsequent a failed attempt from the wireless network to establish communication between the telephone and the unavailable mobile communication device, the data item stored in the database being a copy of a communication device data item stored in the unavailable mobile communication device; send to the telephone at least one data item identification option; receive from the telephone, an identification of the data item; and in response to the identification of the data item, send to the telephone at least one data item action option.

The transceiver can also be operable to, before sending to the telephone at least one data item identification option: send to the telephone a data item access option; and receive from the telephone, a selection of the data item access option.

In a fourth aspect of the present disclosure, there may be provided a method to access a data item stored in a database, the data item being one of a contact name, a telephone number, an email address, a memo, a calendar event, and a task list, the database being operationally connected to a server, the server being operationally connected to a wireless network, the method comprising, at the server: receiving a call from a telephone subsequent a failed attempt from the wireless network to establish communication between the telephone and a mobile communication device; in response to the call, sending to the telephone a data item access option; receiving from the telephone, a selection of the data item access option; in response to the selection of the data item access option, sending to the telephone at least one data item identification option; receiving from the telephone, an identification of the data item; and in response to the identification of the data item, sending to the telephone at least one data item action option.

It will be appreciated that for simplicity and clarity of illustration, where considered appropriate, reference numerals may be repeated among the figures to indicate corresponding or analogous elements. In addition, numerous specific details are set forth in order to provide a thorough understanding of the embodiments described herein. However, it will be understood by those of ordinary skill in the art that the embodiments described herein may be practiced without these specific details. In other instances, well-known methods, procedures and components have not been described in detail so as not to obscure the embodiments described herein. Also, the description is not to be considered as limiting the scope of the embodiments described herein.

The embodiments described herein generally relate to a mobile wireless communication device, hereafter referred to as a mobile device. Examples of applicable communication devices include cellular phones, cellular smart-phones, handheld wireless communication devices and the like.

### BRIEF DESCRIPTION OF THE DRAWINGS

Embodiments of the present disclosure will now be described, by way of example only, with reference to the attached Figures, wherein:
Figure 1 shows a block diagram of an embodiment of a mobile communication device;
Figure 2 shows a block diagram example of the communication subsystem component shown at Figure 1;
Figure 3 shows a block diagram of an implementation of a node of the wireless network 200 shown at Figure 1;
Figure 4 shows a block diagram illustrating components of a configuration of a host system 250 with which the mobile communication of Figure 1 can be communicate;
Figure 5 shows a first option selection flow example in relation to data item access;
Figure 6 shows a second option selection flow example in relation to data item access;
Figure 7 shows an example of a method of the present disclosure; and
Figure 8 shows an embodiment of a server of the present disclosure.

### DESCRIPTION OF PREFERRED EMBODIMENTS

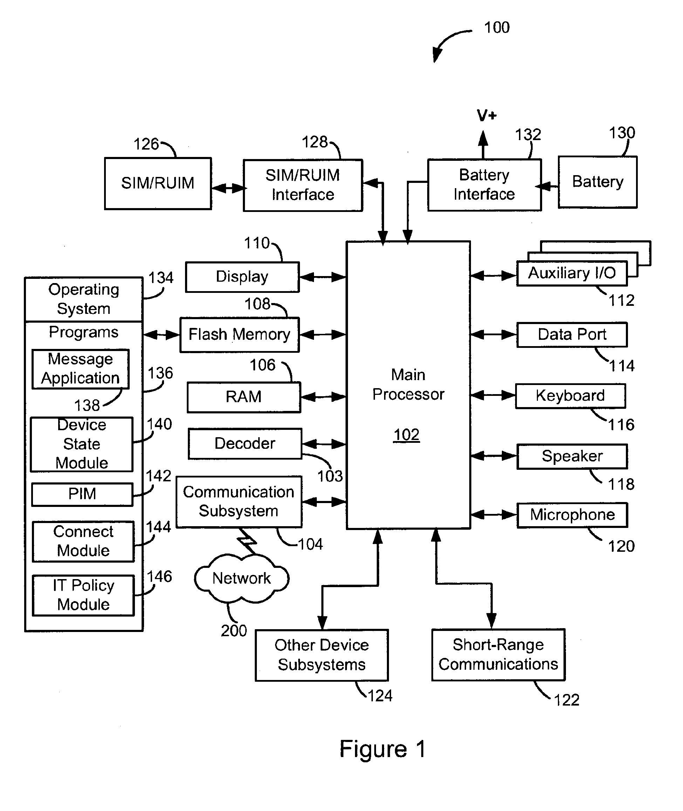

The mobile device is a two-way communication device with data communication capabilities including the capability to communicate with other mobile devices or computer systems through a network of transceiver stations. The mobile device also has the capability to allow voice communication. Depending on the functionality provided by the mobile device, it may be referred to as a data messaging device, a two-way pager, a cellular telephone with data messaging capabilities, a wireless Internet appliance, or a data communication device. To aid the reader in understanding the structure of the mobile device and how it communicates with other devices and host systems, reference will now be made to Figures 1 through 4.

Referring first to Figure 1, shown therein is a block diagram of an embodiment of a mobile device 100. The mobile device 100 includes a number of components such as a main processor 102 that controls the overall operation of the mobile device 100. Communication functions, including data and voice communications, are performed through a communication subsystem 104. Data received by the mobile device 100 can be decompressed and decrypted by decoder 103, operating according to any suitable decompression techniques (e.g. YK decompression, and other known techniques) and encryption techniques (e.g. using an encryption techniques such as Data Encryption Standard (DES), Triple DES, or Advanced Encryption Standard (AES)). The communication subsystem 104 receives messages from and sends messages to a wireless network 200. In this embodiment of the mobile device 100, the communication subsystem 104 is configured in accordance with the Global System for Mobile Communication (GSM) and General Packet Radio Services (GPRS) standards. The GSM/GPRS wireless network is used worldwide and it is expected that these standards will be superseded eventually by Enhanced Data GSM Environment (EDGE) and Universal Mobile Telecommunications Service (UMTS). New standards are still being defined, but it is believed that they will have similarities to the network behavior described herein, and it will also be understood by persons skilled in the art that the embodiments described herein are intended to use any other suitable standards that are developed in the future. The wireless link connecting the communication subsystem 104 with the wireless network 200 represents one or more different Radio Frequency (RF) channels, operating according to defined protocols specified for GSM/GPRS communications. With newer network protocols, these channels are capable of supporting both circuit switched voice communications and packet switched data communications.

Although the wireless network 200 associated with mobile device 100 is a GSM/GPRS wireless network in one implementation, other wireless networks may also be associated with the mobile device 100 in variant implementations. The different types of wireless networks that may be employed include, for example, data-centric wireless networks, voice-centric wireless networks, and dual-mode networks that can support both voice and data communications over the same physical base stations. Combined dual-mode networks include, but are not limited to, Code Division Multiple Access (CDMA) or CDMA2000 networks, GSM/GPRS networks (as mentioned above), and future third-generation (3G) networks like EDGE and UMTS. Some other examples of data-centric networks include WiFi 802.11, Mobitex™ and DataTAC™ network communication systems. Examples of other voice-centric data networks include Personal Communication Systems (PCS) networks like GSM and Time Division Multiple Access (TDMA) systems. The main processor 102 also interacts with additional subsystems such as a Random Access Memory (RAM) 106, a flash memory 108, a display 110, an auxiliary input/output
(I/O) subsystem 112, a data port 114, a keyboard 116, a speaker 118, a microphone 120, short-range communications 122 and other device subsystems 124.

Some of the subsystems of the mobile device 100 perform communication-related functions, whereas other subsystems may provide "resident" or on-device functions. By way of example, the display 110 and the keyboard 116 may be used for both communication-related functions, such as entering a text message for transmission over the network 200, and device-resident functions such as a calculator or task list.

The mobile device 100 can send and receive communication signals over the wireless network 200 after required network registration or activation procedures have been completed. Network access is associated with a subscriber or user of the mobile device 100. To identify a subscriber, the mobile device 100 requires a SIM/RUIM card 126 (i.e. Subscriber Identity Module or a Removable User Identity Module) to be inserted into a SIM/RUIM interface 128 in order to communicate with a network. The SIM card or RUIM 126 is one type of a conventional "smart card" that can be used to identify a subscriber of the mobile device 100 and to personalize the mobile device 100, among other things. Without the SIM card 126, the mobile device 100 is not fully operational for communication with the wireless network 200. By inserting the SIM card/RUIM 126 into the SIM/RUIM interface 128, a subscriber can access all subscribed services. Services may include: web browsing and messaging such as e-mail, voice mail, Short Message Service (SMS), and Multimedia Messaging Services (MMS). More advanced services may include: point of sale, field service and sales force automation. The SIM card/RUIM 126 includes a processor and memory for storing information. Once the SIM card/RUIM 126 is inserted into the SIM/RUIM interface 128, it is coupled to the main processor 102. In order to identify the subscriber, the SIM card/RUIM 126 can include some user parameters such as an International Mobile Subscriber Identity (IMSI). An advantage of using the SIM card/RUIM 126 is that a subscriber is not necessarily bound by any single physical mobile device. The SIM card/RUIM 126 may store additional subscriber information for a mobile device as well, including datebook (or calendar) data and recent call data, which can also be referred to as data items. Alternatively, user identification data and data items can also be programmed into the flash memory 108.

The mobile device 100 is a battery-powered device and includes a battery interface 132 for receiving one or more rechargeable batteries 130. In at least some embodiments, the battery 130 can be a smart battery with an embedded microprocessor. The battery interface 132 is coupled to a regulator (not shown), which assists the battery 130 in providing power V+ to the mobile device 100. Although current technology makes use of a battery, future technologies such as micro fuel cells or capacitor-based power supplies may provide the power to the mobile device 100.

The mobile device 100 also includes an operating system 134 and software components 136 to 146 which are described in more detail below. The operating system 134 and the software components 136 to 146 that are executed by the main processor 102 are typically stored in a persistent store such as the flash memory 108, which may alternatively be a read-only memory (ROM) or similar storage element (not shown). Those skilled in the art will appreciate that portions of the operating system 134 and the software components 136 to 146, such as specific device applications, or parts thereof, may be temporarily loaded into a volatile store such as the RAM 106. Other software components can also be included, as is well known to those skilled in the art.

The subset of software applications 136 that control basic device operations, including data and voice communication applications, will normally be installed on the mobile device 100 during its manufacture. Other software applications include a message application 138 that can be any suitable software program that allows a user of the mobile device 100 to send and receive electronic messages. Various alternatives exist for the message application 138 as is well known to those skilled in the art. Messages that have been sent or received by the user are typically stored in the flash memory 108 of the mobile device 100 or some other suitable storage element in the mobile device 100. In at least some embodiments, some of the sent and received messages may be stored remotely from the device 100 such as in a data store of an associated host system that the mobile device 100 communicates with.

The software applications can further include a device state module 140, a Personal Information Manager (PIM) 142, and other suitable modules (not shown). The device state module 140 provides persistence, i.e. the device state module 140 ensures that important device data is stored in persistent memory, such as the flash memory 108, so that the data is not lost when the mobile device 100 is turned off or loses power.

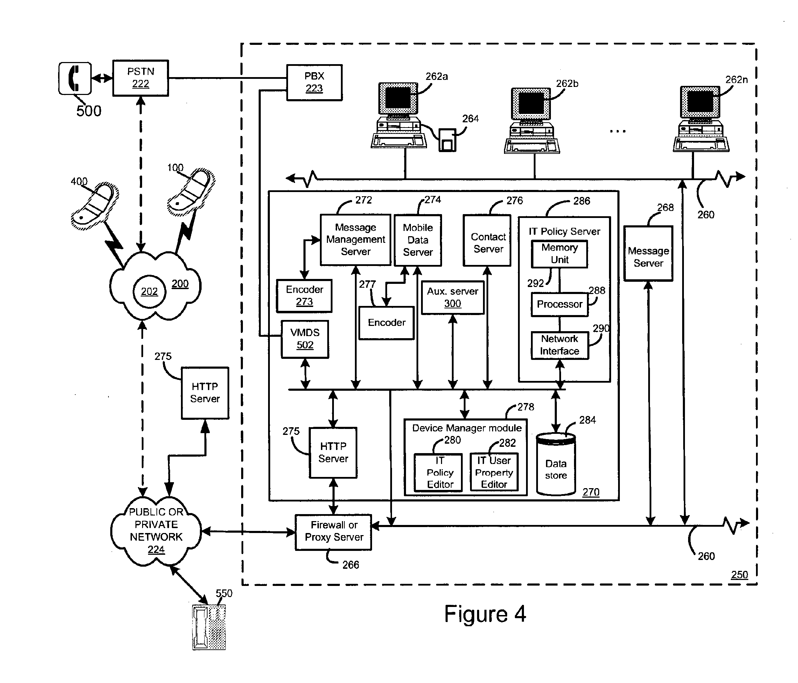

The PIM 142 includes functionality for organizing and managing data items of interest to the user, such as, but not limited to, e-mail, contacts, which can also be referred to as an address book), calendar events, appointments, and task items. The PIM can also organize and manage any voice mails recorded on the mobile device 100. A PIM application has the ability to send and receive data items via the wireless network 200. PIM data items may be seamlessly integrated, synchronized, and updated via the wireless network 200 with the mobile device subscriber's corresponding data items stored in, or accessible by, a host computer system, an embodiment of which is described below in relation to Figure 4. This functionality creates a mirrored host computer on the mobile device 100 with respect to such items. This can be particularly advantageous when the host computer system is the mobile device subscriber's office computer system.

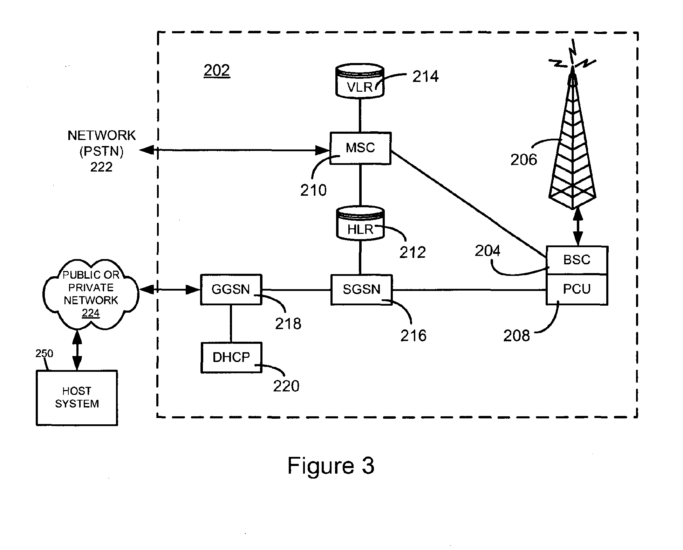

The mobile device 100 also includes a connect module 144, and an information technology (IT) policy module 146. The connect module 144 implements the communication protocols that are required for the mobile device 100 to communicate with the wireless infrastructure and any host system, such as an enterprise system, that the mobile device 100 is authorized to interface with. Examples of a wireless infrastructure and an enterprise system are shown respectively in relation with Figures 3 and 4, which are described in more detail below.

The connect module 144 includes a set of application programming interfaces (APIs) that can be integrated with the mobile device 100 to allow the mobile device 100 to use any number of services associated with the enterprise system. The connect module 144 allows the mobile device 100 to establish an end-to-end secure, authenticated communication pipe with the host system. A subset of applications for which access is provided by the connect module 144 can be used to pass information technology (IT) policy commands from the host system to the mobile device 100. This can be done in a wireless or wired manner. These instructions can then be passed to the IT policy module 146 to modify the configuration of the device 100. Alternatively, in some cases, the IT policy update can also be done over a wired connection.

Other types of software applications can also be installed on the mobile device 100. These software applications can be third party applications, which are added after the manufacture of the mobile device 100. Examples of third party applications include games, calculators, utilities, etc.

The additional applications can be loaded onto the mobile device 100 through at least one of the wireless network 200, the auxiliary input/output (I/O) subsystem 112, the data port 114, the short-range communications subsystem 122, or any other suitable device subsystem 124. This flexibility in application installation increases the functionality of the mobile device 100 and may provide enhanced on-device functions, communication-related functions, or both. For example, secure communication applications may enable electronic commerce functions and other such financial transactions to be performed using the mobile device 100.

The data port 114 enables a subscriber to set preferences through an external device or software application and extends the capabilities of the mobile device 100 by providing for information or software downloads to the mobile device 100 other than through a wireless communication network. The alternate download path may, for example, be used to load an encryption key onto the mobile device 100 through a direct and thus reliable and trusted connection to provide secure device communication.

The data port 114 can be any suitable port that enables data communication between the mobile device 100 and another computing device. The data port 114 can be a serial or a parallel port. In some instances, the data port 114 can be a USB port that includes data lines for data transfer and a supply line that can provide a charging current to charge the battery 130 of the mobile device 100.

The short-range communications subsystem 122 provides for communication between the mobile device 100 and different systems or devices, without the use of the wireless network 200. For example, the subsystem 122 may include an infrared device and associated circuits and components for short-range communication. Examples of short-range communication standards include standards developed by the Infrared Data Association (IrDA), Bluetooth, and the 802.11 family of standards developed by IEEE.

In use, a received signal such as a text message, an e-mail message, or web page download will be processed by the communication subsystem 104 and input to the main processor 102. The main processor 102 will then process the received signal for output to the display 110 or alternatively to the auxiliary I/O subsystem 112. A subscriber may also compose data items, such as e-mail messages, for example, using the keyboard 116 in conjunction with the display 110 and possibly the auxiliary I/O subsystem 112. The auxiliary subsystem 112 may include devices such as: a touch screen, mouse, track ball, infrared fingerprint detector, or a roller wheel with dynamic button pressing capability. The keyboard 116 is preferably an alphanumeric keyboard, a telephone-type keypad, or both. However, other types of keyboards may also be used. A composed item may be transmitted (sent) over the wireless network 200 through the communication subsystem 104.

For voice communications, the overall operation of the mobile device 100 is substantially similar, except that the received signals are output to the speaker 118, and signals for transmission are generated by the microphone 120. Alternative voice or audio I/O subsystems, such as a voice message recording subsystem, can also be implemented on the mobile device 100. Although voice or audio signal output is accomplished primarily through the speaker 118, the display 110 can also be used to provide additional information such as the identity of a calling party, duration of a voice call, or other voice call related information.

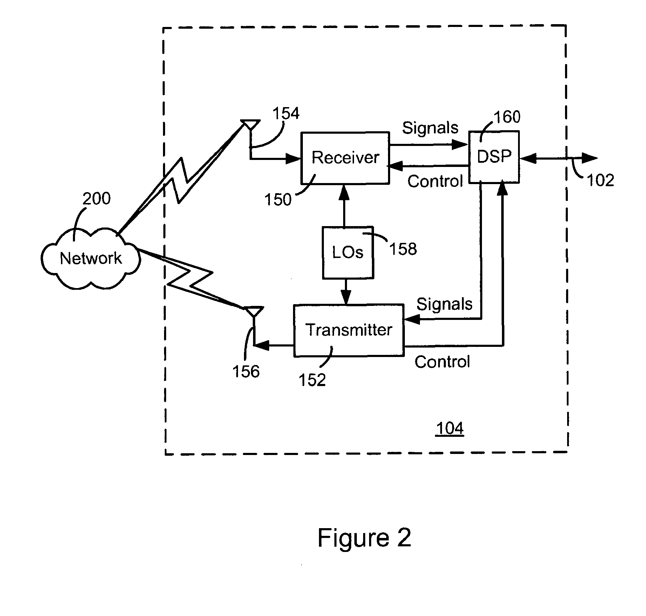

Referring now to Figure 2, an embodiment of a block diagram of the communication subsystem component 104 is shown. The communication subsystem 104 includes a receiver 150, a transmitter 152, as well as associated components such as one or more embedded or internal antenna elements 154 and 156, Local Oscillators (LOs) 158, and a processing module such as a Digital Signal Processor (DSP) 160. The particular design of the communication subsystem 104 is dependent upon the communication network 200 with which the mobile device 100 is intended to operate. Thus, it should be understood that the design illustrated in Figure 2 serves only as one example.

Signals received by the antenna 154 through the wireless network 200 are input to the receiver 150, which may perform such common receiver functions as signal amplification, frequency down conversion, filtering, channel selection, and analog-to-digital (A/D) conversion. A/D conversion of a received signal allows more complex communication functions such as demodulation and decoding to be performed in the DSP 160. In a similar manner, signals to be transmitted are processed, including modulation and encoding, by the DSP 160. These DSP-processed signals are input to the transmitter 152 for digital-to-analog (D/A) conversion, frequency up conversion, filtering, amplification and transmission over the wireless network 200 via the antenna 156. The DSP 160 not only processes communication signals, but also provides for receiver and transmitter control. For example, the gains applied to communication signals in the receiver 150 and the transmitter 152 may be adaptively controlled through automatic gain control algorithms implemented in the DSP 160.

The wireless link between the mobile device 100 and the wireless network 200 can contain one or more different channels, typically different RF channels, and associated protocols used between the mobile device 100 and the wireless network 200. An RF channel is a limited resource that should be conserved, typically due to limits in overall bandwidth and limited battery power of the mobile device 100.

When the mobile device 100 is fully operational, the transmitter 152 is typically keyed or turned on only when it is transmitting to the wireless network 200 and is otherwise turned off to conserve resources. Similarly, the receiver 150 is periodically turned off to conserve power until it is needed to receive signals or information (if at all) during designated time periods.

Referring now to Figure 3, a block diagram of an implementation of a node 202 of the wireless network 200 is shown. In practice, the wireless network 200 comprises one or more nodes 202. In conjunction with the connect module 144, the mobile device 100 can communicate with the node 202 within the wireless network 200. In the implementation of Figure 3, the node 202 is configured in accordance with General Packet Radio Service (GPRS) and Global Systems for Mobile (GSM) technologies. The node 202 includes a base station controller (BSC) 204 with an associated tower station 206, a Packet Control Unit (PCU) 208 added for GPRS support in GSM, a Mobile Switching Center (MSC) 210, a Home Location Register (HLR) 212, a Visitor Location Registry (VLR) 214, a Serving GPRS Support Node (SGSN) 216, a Gateway GPRS Support Node (GGSN) 218, and a Dynamic Host Configuration Protocol (DHCP) 220. This list of components is not meant to be an exhaustive list of the components of every node 202 within a GSM/GPRS network, but rather a list of components that are commonly used in communications through the network 200.

In a GSM network, the MSC 210 is coupled to the BSC 204 and to a landline network, such as a Public Switched Telephone Network (PSTN) 222 to satisfy circuit switched requirements. The connection through the PCU 208, the SGSN 216 and the GGSN 218 to a public or private network (Internet) 224 (also referred to herein generally as a shared network infrastructure) represents the data path for GPRS capable mobile devices. In a GSM network extended with GPRS capabilities, the BSC 204 also contains the Packet Control Unit (PCU) 208 that connects to the SGSN 216 to control segmentation, radio channel allocation and to satisfy packet switched requirements. To track the location of the mobile device 100 and availability for both circuit switched and packet switched management, the HLR 212 is shared between the MSC 210 and the SGSN 216. Access to the VLR 214 is controlled by the MSC 210.

The station 206 is a fixed transceiver station and together with the BSC 204 form fixed transceiver equipment. The fixed transceiver equipment provides wireless network coverage for a particular coverage area commonly referred to as a "cell". The fixed transceiver equipment transmits communication signals to, and receives communication signals from, mobile devices within its cell via the station 206. The fixed transceiver equipment normally performs such functions as modulation and possibly encoding and/or encryption of signals to be transmitted to the mobile device 100 in accordance with particular, usually predetermined, communication protocols and parameters, under control of its controller. The fixed transceiver equipment similarly demodulates and possibly decodes and decrypts, if necessary, any communication signals received from the mobile device 100 within its cell. Communication protocols and parameters may vary between different nodes. For example, one node may employ a different modulation scheme and operate at different frequencies than other nodes.

For all mobile devices 100 registered with a specific network, permanent configuration data such as a user profile is stored in the HLR 212. The HLR 212 also contains location information for each registered mobile device and can be queried to determine the current location of a mobile device. The MSC 210 is responsible for a group of location areas and stores the data of the mobile devices currently in its area of responsibility in the VLR 214. Further, the VLR 214 also contains information on mobile devices that are visiting other networks. The information in the VLR 214 includes part of the permanent mobile device data transmitted from the HLR 212 to the VLR 214 for faster access. By moving additional information from a remote HLR 212 node to the VLR 214, the amount of traffic between these nodes can be reduced so that voice and data services can be provided with faster response times and at the same time requiring less use of computing resources.

The SGSN 216 and the GGSN 218 are elements added for GPRS support; namely packet switched data support, within GSM. The SGSN 216 and the MSC 210 have similar responsibilities within the wireless network 200 by keeping track of the location of each mobile device 100. The SGSN 216 also performs security functions and access control for data traffic on the wireless network 200. The GGSN 218 provides internetworking connections with external packet switched networks and connects to one or more SGSNs 216 via an Internet Protocol (IP) backbone network operated within the network 200. During normal operations, a given mobile device 100 must perform a "GPRS Attach" to acquire an IP address and to access data services. This requirement is not present in circuit switched voice channels as Integrated Services Digital Network (ISDN) addresses are used for routing incoming and outgoing calls. Currently, all GPRS capable networks use private, dynamically assigned IP addresses, thus requiring the DHCP server 220 to be connected to the GGSN 218. There are many mechanisms for dynamic IP assignment, including using a combination of a Remote Authentication Dial-In User Service (RADIUS) server and a DHCP server. Once the GPRS Attach is complete, a logical connection is established from a mobile device 100, through the PCU 208, and the SGSN 216 to an Access Point Node (APN) within the GGSN 218. The APN represents a logical end of an IP tunnel that can either access direct Internet compatible services or private network connections. The APN also represents a security mechanism for the network 200, insofar as each mobile device 100 must be assigned to one or more APNs and mobile devices 100 cannot exchange data without first performing a GPRS Attach to an APN that it has been authorized to use. The APN may be considered to be similar to an Internet domain name such as "myconnection.wireless.com".

Once the GPRS Attach operation is complete, a tunnel is created and all traffic is exchanged within standard IP packets using any protocol that can be supported in IP packets. This includes tunneling methods such as IP over IP as in the case with some IPSecurity (IPsec) connections used with Virtual Private Networks (VPN). These tunnels are also referred to as Packet Data Protocol (PDP) Contexts and there are a limited number of these available in the network 200. To maximize use of the PDP Contexts, the network 200 will run an idle timer for each PDP Context to determine if there is a lack of activity. When a mobile device 100 is not using its PDP Context, the PDP Context can be de-allocated and the IP address returned to the IP address pool managed by the DHCP server 220.

Referring now to Figure 4, shown therein is a block diagram illustrating components of a configuration of a host system 250 that the mobile device 100 can communicate with in conjunction with the connect module 144. The host system 250 will typically be a corporate enterprise or other local area network (LAN), but may also be a home office computer or some other private system, for example, in variant implementations. In this example shown in Figure 4, the host system 250 is depicted as a LAN of an organization to which a user of the mobile device 100 belongs. Typically, a plurality of mobile devices can communicate wirelessly with the host system 250 through one or more nodes 202 of the wireless network 200.

The host system 250 comprises a number of network components connected to each other by a network 260. For instance, a user's desktop computer 262a with an accompanying cradle 264 for the user's mobile device 100 is situated on the network 260. The cradle 264 for the mobile device 100 can be coupled to the computer 262a by a serial or a Universal Serial Bus (USB) connection, for example. Other user computers 262b-262n are also situated on the network 260, and each may or may not be equipped with an accompanying cradle 264. The cradle 264 facilitates the loading of data (e.g. PIM data, private symmetric encryption keys to facilitate secure communications) from the user computer 262a to the mobile device 100, and may be particularly useful for bulk data updates often performed in initializing the mobile device 100 for use. The data downloaded to the mobile device 100 may include certificates used in the exchange of messages.

It will be understood by persons skilled in the art that the user computers 262a-262n will typically also be connected to other peripheral devices, such as printers, etc. which are not explicitly shown in Figure 4. Furthermore, only a subset of network components of the host system 250 are shown in Figure 4 for ease of exposition, and it will be understood by persons skilled in the art that the host system 250 will comprise additional components that are not explicitly shown in Figure 4 for this configuration. More generally, the host system 250 may represent a smaller part of a larger network (not shown) of the organization, and may comprise different components, be arranged in different topologies than that shown in the embodiment of Figure 4, or both.

To facilitate the operation of the mobile device 100, the wireless communication of messages and message-related data between the mobile device 100 and components of the host system 250, a number of wireless communication support components 270 can be provided. In some implementations, the wireless communication support components 270 can include a message management server 272, a mobile data server (MDS) 274, a web server, such as Hypertext Transfer Protocol (HTTP) server 275, a contact server 276, an auxiliary server 300, and a device manager module 278. HTTP servers can also be located outside the enterprise system, as indicated by the HTTP server 275 attached to the network 224. The device manager module 278 includes an IT Policy editor 280 and an IT user property editor 282, as well as other software components for allowing an IT administrator to configure the mobile devices 100. In an alternative embodiment, there may be one editor that provides the functionality of both the IT policy editor 280 and the IT user property editor 282. The support components 270 also include a data store 284, which can also be referred to as a database, and an IT policy server 286. The IT policy server 286 includes a processor 288, a network interface 290 and a memory unit 292. The processor 288 controls the operation of the IT policy server 286 and executes functions related to the standardized IT policy as described below. The network interface 290 allows the IT policy server 286 to communicate with the various components of the host system 250 and the mobile devices 100. The memory unit 292 can store functions used in implementing the IT policy as well as related data. Those skilled in the art know how to implement these various components. Other components may also be included as is well known to those skilled in the art. Further, in some implementations, the data store (database) 284 can be part of any one of the servers.

In this embodiment, the mobile device 100 communicates with the host system 250 through node 202 of the wireless network 200 and a shared network infrastructure 224 such as a service provider network or the public Internet. Access to the host system 250 may be provided through one or more routers (not shown), and computing devices of the host system 250 may operate from behind a firewall or proxy server 266. The proxy server 266 provides a secure node and a wireless internet gateway for the host system 250. The proxy server 266 intelligently routes data to the correct destination server within the host system 250.

In some implementations, the host system 250 can include a wireless virtual private network (VPN) router (not shown) to facilitate data exchange between the host system 250 and the mobile device 100. The wireless VPN router allows a VPN connection to be established directly through a specific wireless network to the mobile device 100. The wireless VPN router can be used with the Internet Protocol (IP) Version 6 (IPV6) and IP-based wireless networks. This protocol can provide enough IP addresses so that each mobile device has a dedicated IP address, making it possible to push data to a mobile device at any time. An advantage of using a wireless VPN router is that it can be an off-the-shelf VPN component, and does not require a separate wireless gateway and separate wireless infrastructure. A VPN connection can preferably be a Transmission Control Protocol (TCP)/IP or User Datagram Protocol (UDP)/IP connection for delivering the messages directly to the mobile device 100 in this alternative implementation.

Messages intended for a user of the mobile device 100 are initially received by a message server 268 of the host system 250. Such messages may originate from any number of sources. For instance, a message may have been sent by a sender from the computer 262b within the host system 250, from a different mobile device (e.g., mobile device 400) connected to the wireless network 200 or a different wireless network, or from a different computing device, or other devices capable of sending messages, via the shared network 224, possibly through an application service provider (ASP) or Internet service provider (ISP), for example.

The message server 268 typically acts as the primary interface for the exchange of messages, particularly e-mail messages, within the organization and over the shared network 224. Each user in the organization that has been set up to send and receive messages is typically associated with a user account managed by the message server 268. Some implementations of the message server 268 include a Microsoft Exchange™ server, a Lotus Domino™ server, a Novell Groupwise™ server, or another suitable mail server installed in a corporate environment. In some implementations, the host system 250 may comprise multiple message servers 268. The message server 268 may also be adapted to provide additional functions beyond message management, including the management of data associated with calendars and task lists, for example.

When messages are received by the message server 268, they are typically stored in a data store associated with the message server 268. In some embodiments, the data store may be a separate hardware unit, such as data store 284, that the message server 268 communicates with. Messages can be subsequently retrieved and delivered to users by accessing the message server 268. For instance, an e-mail client application operating on a user's computer 262a may request the e-mail messages associated with that user's account stored on the data store associated with the message server 268. These messages are then retrieved from the data store and stored locally on the computer 262a. The data store associated with the message server 268 can store copies of each message that is locally stored on the mobile device 100. Alternatively, the data store associated with the message server 268 can store all of the messages for the user of the mobile device 100 and only a smaller number of messages can be stored on the mobile device 100 to conserve memory. For instance, the most recent messages (i.e. those received in the past two to three months for example) can be stored on the mobile device 100.

When operating the mobile device 100, the user may wish to have e-mail messages retrieved for delivery to the mobile device 100. The message application 138 operating on the mobile device 100 may also request messages associated with the user's account from the message server 268. The message application 138 may be configured (either by the user or by an administrator, possibly in accordance with an organization's IT policy) to make this request at the direction of the user, at some pre-defined time interval, or upon the occurrence of some pre-defined event. In some implementations, the mobile device 100 is assigned its own e-mail address, and messages addressed specifically to the mobile device 100 are automatically redirected to the mobile device 100 as they are received by the message server 268.

The message management server 272 can be used to specifically provide support for the management of messages, such as e-mail messages, that are to be handled by mobile devices. Generally, while messages are still stored on the message server 268, the message management server 272 can be used to control when, if, and how messages are sent to the mobile device 100. The message management server 272 also facilitates the handling of messages composed on the mobile device 100, which are sent to the message server 268 for subsequent delivery.

For example, the message management server 272 may monitor the user's "mailbox" (e.g., the message store associated with the user's account on the message server 268) for new e-mail messages, and apply user-definable filters to new messages to determine if and how the messages are relayed to the user's mobile device 100. The message management server 272 may also, through an encoder 273, compress messages, using any suitable compression technology (e.g., YK compression, and other known techniques) and encrypt messages (e.g., by using an encryption technique such as Data Encryption Standard (DES), Triple DES, or Advanced Encryption Standard (AES)), and push them to the mobile device 100 via the network 224 and the wireless network 200. The message management server 272 may also receive messages composed on the mobile device 100 (e.g., encrypted using Triple DES), decrypt and decompress the composed messages, re-format the composed messages if desired so that they will appear to have originated from the user's computer 262a, and re-route the composed messages to the message server 268 for delivery.

Certain properties or restrictions associated with messages that are to be sent from the mobile device 100, received by the mobile device 100, or both, can be defined (e.g., by an administrator in accordance with an IT policy) and enforced by the message management server 272. These may include whether the mobile device 100 may receive encrypted messages, signed messages, or both; minimum encryption key sizes, whether outgoing messages must be encrypted, signed, or both; and whether copies of all secure messages sent from the mobile device 100 are to be sent to a pre-defined copy address, for example.

The message management server 272 may also be adapted to provide other control functions, such as only pushing certain message data or pre-defined portions (e.g., "blocks") of a message stored on the message server 268 to the mobile device 100. For example, in some cases, when a message is initially retrieved by the mobile device 100 from the message server 268, the message management server 272 may push only the first part of a message to the mobile device 100, with the part being of a pre-defined size (e.g. 2 KB). The user can then request that more of the message be delivered in similar-sized blocks by the message management server 272 to the mobile device 100, possibly up to a maximum pre-defined message size. Accordingly, the message management server 272 facilitates better control over the type of data and the amount of data that is communicated to the mobile device 100, and can help to minimize potential waste of bandwidth or other resources.

The MDS 274 encompasses any other server that stores data that is relevant to the corporation. The MDS 274 may include, but is not limited to, databases, online data document repositories, customer relationship management (CRM) systems, or enterprise resource planning (ERP) applications. The MDS 274 can also connect to the Internet or other public network, through HTTP server 275 or other suitable web server such as a File Transfer Protocol (FTP) server, to retrieve HTTP web pages and other data. Requests for web pages are typically routed through MDS 274 and then to HTTP server 275, through suitable firewalls and other protective mechanisms. The web server (HTTP server 275) then retrieves the webpage over the Internet, and returns it to MDS 274. As described above in relation to message management server 272, MDS 274 is typically provided, or associated, with an encoder 277 that permits retrieved data, such as retrieved web pages, to be compressed, using any suitable compression technology (e.g., YK compression, and other known techniques), and encrypted (e.g., using an encryption technique such as DES, Triple DES, or AES), and then pushed to the mobile device 100 via the network 224 and the wireless network 200.

The contact server 276 can provide data with respect to a list of data items such as contacts for the user in a similar fashion as the address book on the mobile device 100. Accordingly, for a given contact, which is itself a data item, the contact server 276 can include additional data items such as, for example, the name, phone number, work address and e-mail address of the contact. The contact server 276 can also provide a global address list that contains the contact data for all of the contacts associated with the host system 250. The contact server 276 can include a database or can use another database such as the data store 284 to store the data items.

The auxiliary server 300 can provide information for a list of data items including, for example, appointments, calendar events, tasks, memos, etc. The auxiliary server 300 can include a dedicated database or can use another database such as the data store 284 to store the data items.

It will be understood by persons skilled in the art that the message management server 272, the MDS 274, the HTTP server 275, the contact server 276, the auxiliary server 300, the device manager module 278, the data store 284 and the IT policy server 286 do not need to be implemented on separate physical servers within the host system 250. For example, some or all of the functions associated with the message management server 272 may be integrated with the message server 268, or some other server in the host system 250. Alternatively, the host system 250 may comprise multiple message management servers 272, particularly in variant implementations where a large number of mobile devices need to be supported.

The device manager module 278 can provide an IT administrator with a graphical user interface with which the IT administrator interacts to configure various settings for the mobile devices 100. As mentioned, the IT administrator can use IT policy rules to define behaviors of certain applications on the mobile device 100 that are permitted such as phone, web browser or Instant Messenger use. The IT policy rules can also be used to set specific values for configuration settings that an organization requires on the mobile devices 100 such as auto signature text, WLAN/VoIP/VPN configuration, security requirements (e.g. encryption algorithms, password rules, etc.), specifying themes or applications that are allowed to run on the mobile device 100, and the like.

As discussed above in relation to Figure 1, the PIM 142 provides functionality to the mobile device 100 with respect to the organization and management voice mails and of data items of interest to the user, such data items including, amongst others, e-mails, contacts, calendar events, appointments, and task lists. Further, as discussed above, PIM data items may be seamlessly integrated, synchronized, and updated via the wireless network 200 with the mobile device subscriber's corresponding data items stored, associated, or both, with the host system 250. This functionality creates a mirrored host computer on the mobile device 100 with respect to such items.

The user of the mobile device 100 can access the data items stored on his mobile device as long as he has the mobile device 100 in his possession, provided the mobile device 100 is functional. The present disclosure allows the user of the mobile device 100 to access such data items even in the case where the mobile device 100 is lost, unusable (e.g., unavailable battery power), or otherwise unavailable for use. As will be described below, the user in question can access such data items by using, for example, a landline telephone, another mobile device, or a Voice over IP (VoIP) telephone, by dialing the telephone number of the unavailable mobile device 100 to contact the host system 250 in which the data items in question are also stored.

Figure 4 shows a landline telephone 500 connected to the PSTN 222, a mobile device 400 connected to the wireless network 200, and a VoIP telephone 550 connected to the network 224. For the purpose of the present disclosure, the landline telephone 500, the mobile devices 100 and 400, and the VoIP telephone 224 can be referred to as telephones or telephone devices.

In the case where the user uses the landline telephone 500 to access data items stored on the host system 250, the user dials the telephone number of the mobile device 100 from the landline telephone 500. That is, the user dials his own mobile device telephone number, which is likely a number that he will remember. Upon dialing the number in question, the PSTN 222 receives and directs the call to the wireless network 200. If the mobile device 100 is unavailable (e.g., is dead, out of reach of the wireless network 200, or there is no answer), the wireless network 200, upon verifying that the mobile device 100 is unavailable to receive the incoming call, or that no one is answering, can re-direct the call to a private branch exchange (PBX) 223 of the host system 250, the PBX 223 being in communication with a voice mail and data server (VMDS) 502.

The VMDS 502 can present to the caller, through the PBX 223, an option of leaving a voice mail message (leave-message option). This can be done by the VMDS 502 playing back a pre-recorded message prompting the caller to leave a message. The pre-recorded message can be a stock message installed in the VMDS 502, or can be a pre-recorded message prepared by the owner of the mobile device. Voice mail messages can be stored in the VMDS 502 itself or can be stored in any other database in communication with, or operationally connected to, the VMDS 502.

The VMDS 502 can also allow the caller to select a voice mail access option by pressing, before the onset of the leave-message option, a first pre-determined key sequence on the landline telephone 500, e.g., by pressing the key sequence " * * ". As is known in the art, such voice mail access options allow the user, once he has provided correct identification data to the VMDS 502, to change voice mail preferences such as, for example, the pre-recorded greeting, the number of rings before the onset of the leave-message option, etc. Other means of selecting the voice mail access option, such as, for example, by having the VMDS 502 enabled to understand voice commands such as, e.g., the command "voicemail access" is also within the scope of the present disclosure..

Additionally, the VMDS 502 allows the caller to select a data access option by pressing, before or after the onset of the leave-message option, a second pre-determined key sequence on the landline telephone 500, e.g., by pressing the key sequence "# #". As will be described in more detail below, the selection of the data access option allows the user to access data items stored in the host system 250. Other means of selecting the data access option, such as, for example, by having the VMDS 502 enabled to understand voice commands such as, e.g., the command "data access" is also within the scope of the present disclosure.

Upon the data access option having been selected, the MVDS 502 prompts the caller, for example, through playback of a pre-recorded message, to enter identification data to access data items stored in the host system 250. The identification data, which can also be referred to as a password, can be a pre-determined key sequence or, if the VMDS 502 has voice recognition capabilities, can be a pre-determined word or phrase to be spoken by the caller. Upon confirmation of the password, the VMDS 502 can present to the user, in any sequence, options to retrieve data items.

As will be understood by the skilled worker, the interaction between the user and the VMDS 502 can take different forms. For example, to prompt or request the caller (user) to select an option, the VMDS 502 can play to the caller a pre-recorded message and ask the caller to indicate a reply to the message by pressing certain keys on the landline telephone 500. For example, if the VMDS 502 has asked the caller a question that can be answered by a "yes" or "no" response, the VMDS 502 can state: "To indicate yes press '1'; to indicate no press '2'."

In the case where the VMDS 502 is equipped with voice recognition software, interactive voice recognition capabilities, or both, the interaction between the caller and the VMDS 502 can include the caller responding verbally to pre-recorded prompts played by the VMDS 502 to the caller, or the caller simply stating a request such as, for example: "Retrieve Contact_Name and telephone number."

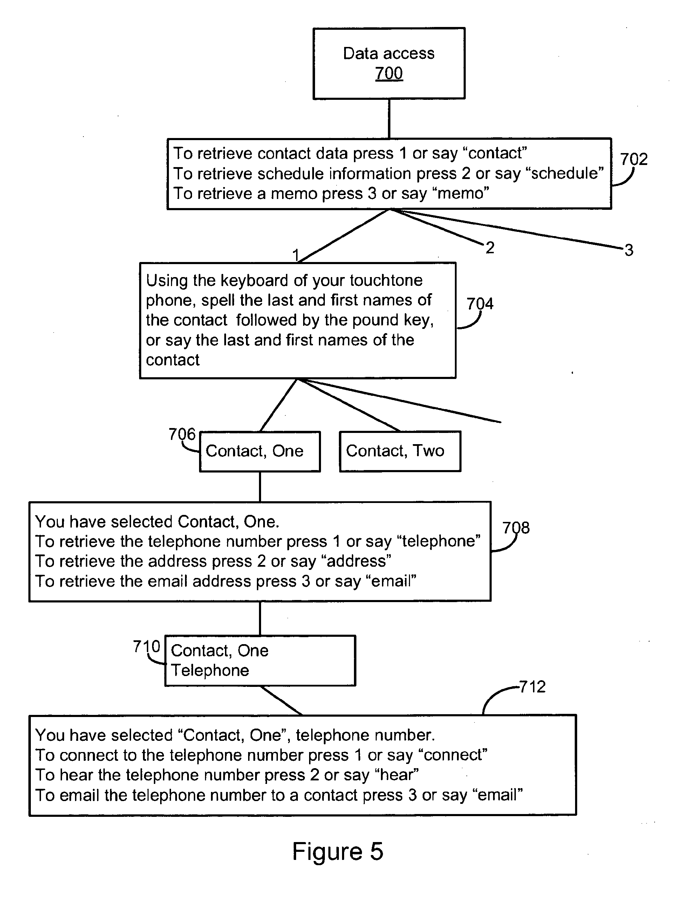

Figure 5 shows an example of a flow of option selection, where the caller has selected a data access option 700. Once the data access option 700 has been selected, the VMDS 502 plays back the message 702, which prompts the caller to select, for example, between contacts, schedule and memo data, which, as stated above, can all be referred to as data items. The options listed in message 702 can be referred to as data item identification options. Any number of different or additional options can be presented in the message 702 without departing from the scope of the present disclosure. In the present example, the caller can provide an answer to the message 704 either verbally or by using the keypad of the landline telephone 500.

Once the caller has indicated a choice to the VMDS 502, choice '1' (contacts) in the example of Figure 5, the VMDS 502 plays back to the user a message 704, asking the caller to identify the contact for which he wishes to retrieve data. The message 704 can be said to include data item identification options. The VMDS 502 can communicate with the contact server 276 to compare the answer to the message 704 with the contact data accessible by (or associated with) the contact server 276 in order to confirm the existence of the contact identified by the caller. The contact data can be stored in data store 284 or in any other database accessible by the contact server.

In the present example, once "Contact, One" 706 has been identified as the contact, the VMDS 502 presents to the caller, for selection, a message 708, which lists types of data items related to "Contact, One". The options listed in message 708 can also be referred to as data item identification options. The VMDS 502 may also read back to the caller the identified contact and request confirmation by the caller. As shown at Figure 5, the message 708 presented to the caller asks the caller to select between "telephone" (1), "address" (2), and "email" (3) items associated with, or related to, "Contact, One". In the present example, in response to the message 708, the caller has selected "telephone" (1) 710 to retrieve the telephone number of "Contact, One".

In an embodiment, upon selection by the caller of the "telephone number" of "Contact, One", the VMDS 502 presents to the user a message 712, which lists different options, which can be referred to as data item action options, with respect to the telephone number of "Contact, One". For example, the VMDS 502 can present the option of connecting the caller to "Contact, One". Upon selection of this option, the VMDS 502 can setup a communication connection (or establish communication) between the landline telephone 500 and the party, "Contact, One", which is associated with the telephone number.

The VMDS 502 can also present to the user the option (data item action option) of having the VMDS 502 send the data item from the database (e.g., the data store 284) to the landline telephone 500, e.g., by reading out (spelling) to the caller, the telephone number of "Contact, One". This option can be enabled by a text-to-speech application running on the VMDS 502. Further, the VMDS 502 can present to the caller the data item action option of emailing the telephone number to another contact associated with the contact server 276. If the latter data item action option is selected by the caller, the VMDS 502 could ask the caller to identify, for example, through a step similar to that depicted at reference numeral 704, the contact to whom the telephone number is to be emailed. Once the contact in question has been identified, the VMDS 502 would generate an email message containing the telephone number and communicate the message to the message server 268, which would direct (send) the email message to the contact in question. As will be understood by the skilled worker, a short message service (SMS) message, or any other suitable type of text message, could be sent instead of an email message, without departing from the scope of the present disclosure. Further, a multimedia messaging service (MMS) message could also be sent from the database to a telephone number or an email address without departing from the scope of the present disclosure.

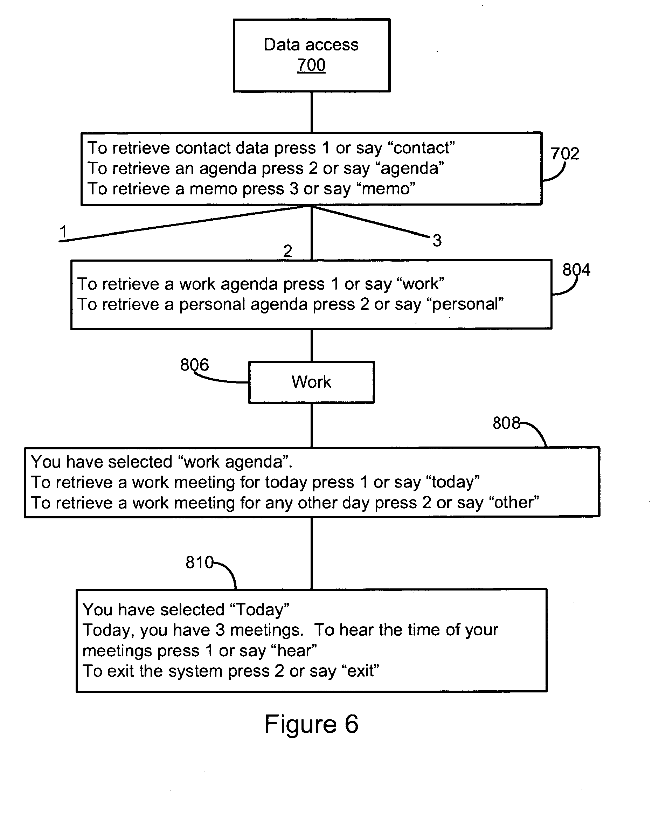

To summarize the example of Figure 6, a database, e.g., the data store 284, has a data item stored therein, and the database is operationally connected to the VMDS 502. That is, the VMDS 502 can connect to the database to access the data item. The VMDS 502 is also operationally connected the wireless network 200, which means that the VMDS 502 can receive/send calls from/to the wireless network 200. For example, this can be done through the PSTN 222 and PBX223, or through the network 224 and proxy server 226. The VMDS 502 receives a call from the landline telephone 500 subsequent a failed attempt from the wireless network 200 to establish communication (a communication connection) between the telephone 500 and the mobile device 100, which can also be referred to as a mobile communication device. Subsequently to having receive the call, the VMDS 502 sends to the landline telephone 500 at least one data item identification option and in response receives an identification of the data item to be accessed. Following this, the VMDS 502 sends the telephone one or more data item action options.

In the case where the owner of the mobile device 100 places a call to the mobile device 100 by using the mobile device 400 connected to the wireless network 200, the wireless network 200, upon verifying that the mobile device 100 is unavailable to receive the incoming call, re-directs the incoming call to the PBX 223 of the host system 250 and the same scenario as that described above in relation to using the landline telephone 500 is repeated. Alternatively, the wireless network can re-direct the call to the host system 250 through the network 224, by using any appropriate VolP protocol.

In the case where the owner of the mobile device 100 places a call to the mobile device 100 by using the VolP telephone 500 connected to the network 224, the call is routed through the wireless network 200. Upon verification that the mobile device 100 is unavailable, the call can be re-directed through the network 224, or through the PSTN 222, to the host system 250, and connect to the VMDS 502 where the same scenario as that described above in relation to the using the landline telephone 500 is repeated.

Further, if the user is calling from a telephone equipped with at display screen, the MVDS 502 can provide the retrieved data item to the telephone for display to the caller.

There are other ways by which VMDS 502 may receive a call after a failed attempt from the wireless network 200 to establish communication between the landline telephone 500 (or the mobile device 400, or the VolP telephone 550) and the mobile device 100. For example, the wireless network 200 can re-direct the call received from the landline telephone 500 (or from the mobile device 400, or the VolP telephone 550) to a wireless carrier system (not shown) with which the mobile device 100 is registered. From there, the carrier can offer the leave-message option and, can also offer the data access option. If the caller selects the data access option, the carrier can direct the call to the host system 250 and the VMDS 502, through either the PSTN 222, the wireless network 200, or, the public or private network 224, or through any suitable combination thereof. Subsequent to having received the call, the VMDS 502 sends to the landline telephone 500 (or to the mobile device 400, or to the VolP telephone 550) at least one data item identification option and in response receives an identification of the data item to be accessed. Following this, the VMDS 502 sends the landline telephone 500 (or the mobile device 400, or the VolP telephone 550) one or more data item action options

Figure 6 shows another example where the caller has selected the data access option 700. As in the example described in relation to Figure 5, once the data access option 700 has been selected, the VMDS 502 plays back the message 802, which prompts the caller to select, for example, between contact, schedule and memo data.

Once the caller has indicated a choice to the VMDS 502, choice 2 (agenda) in the example of Figure 6, the VMDS 502 plays back to the user a message 804, asking the caller to identify, for example, whether a work agenda or a personal agenda is to be accessed.

In the present example, once "Work" 806 has been identified as the type of agenda, the VMDS 502 presents to the caller, for selection, a message 808, which lists an option for work meetings of "Today" (press '1' option) and work meetings of any other day (press '2' option). As will be understood by the skilled worker, the VMDS 502 can interact with the auxiliary server 300 to access data items such as, for example, appointments, calendar events, tasks, memos, etc., stored in the system 250. Alternatively, the VMDS 502 can be set to access such items directly without having recourse to the auxiliary server 300. Upon selection by the caller of the "Today" option, the VMDS 502 presents to the user a message 810, which advises the caller that he has three meetings scheduled for today. The message 810 also prompt the user to have the meeting times read to him or to exit the host system 250. The option of having the meeting times read to the caller can be referred to as a data item action option. As will be understood by the skilled worker, any other or additional options can be presented to the caller without departing from the scope of the present disclosure. For example, the VMDS 502 could present to the caller options regarding the subject of the meetings and the confirmed attendees. As a further example, the VMDS 502 could present to the caller data item action options regarding messages to be sent to the confirmed attendees, or the option of having a meeting invitation emailed, or sent by, e.g., SMS or MMS to other contacts associated with the contact server 276.

Other selectable options (e.g., other data item action options) that can be presented at step 702 and 802 of Figs. 5 and 6 respectively, include an option to retrieve an email message. Once selected, this option would request that the caller identify, through a series of data item identification options, an email stored in the host system 250 and to have the email read to the user through any suitable text-to-speech application running on the VMDS 502, emailed to a contact stored in the host system 250, or both.

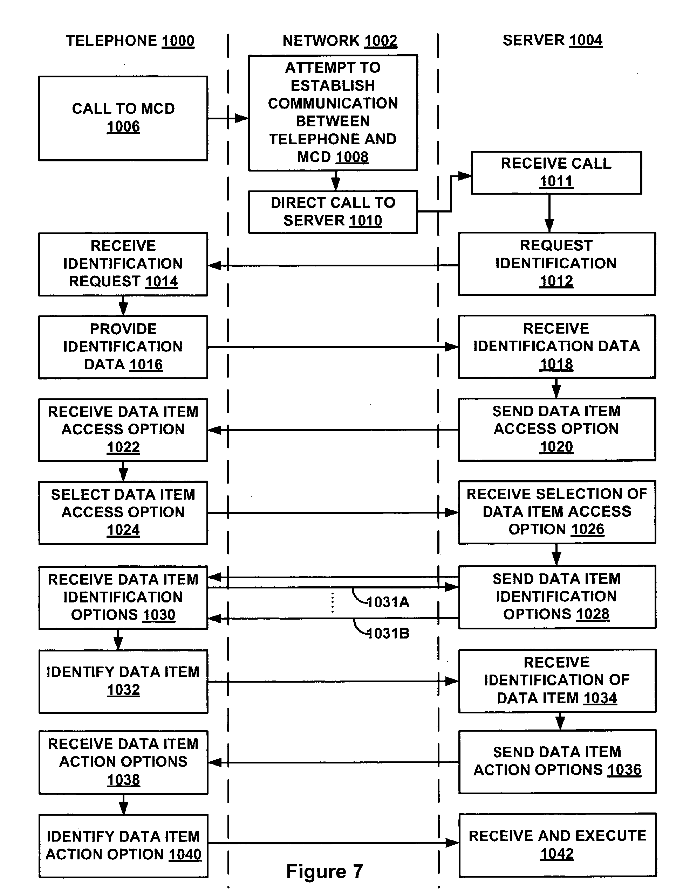

Figure 7 shows an embodiment of a method of the present disclosure. In the present example, the owner of an unavailable mobile communication device (MCD) needs to access a data item stored in the MCD and also stored in a database accessible by the MCD. To do so, the method shown at Figure 7 can be used. As shown at Figure 7, the user steps are illustrated in the telephone 1000 portion of the Figure. The telephone 1000 can be a landline telephone 500, another MCD 400, or a VolP telephone 550, as described in relation to the system shown at Figure 4. In Figure 7, adjacent the telephone 1000, is a network 1002, which includes a wireless network (e.g., wireless network 200 in Figure 4), and can include the PSTN (e.g., PSTN 222 at Fig. 4), and a public or private network (e.g., public or private network 224 at Fig. 4). Finally, in Figure 7, adjacent the network 1002 is a server 1004, which can include the VMDS 502, as described in relation to the system shown at Figure 4. The communication between the telephone 1000 and the server 1004 takes place over the network 1002, which merely relays communications between the server 1004 and the telephone 1000.

At step 1006, a call is placed from the telephone 1000 to an MCD, which can be the MCD 100 as described in relation to the system shown at Figure 4. At step 1008, an attempt is made from the wireless network comprised in the network 1002, to establish a communication between the telephone 1000 and the MCD. Upon failure to establish communication (that is, upon being unable, for any reason, to establish communication), the wireless network comprised in the network 1002 directs, at step 1010, the telephone call to the server 1004.

At step 1011, upon the server 1004 receiving the call, or in response to the call, the server 1004 can, optionally, send, at step 1012, an identification request (a user identification request) to the telephone 1000 to identify the user of the telephone 1000 as the owner of the MCD to which the call was placed or as an otherwise approved user. The telephone 1000 receives the identification request at step 1014, and provides, at step 1016, in response to the request, identification data, which can be, for example, a pre-determined telephone key sequence or a pre-determined utterance, which can be the name of the MCD user. The key sequence or the utterance provided at the telephone 1000 is transmitted (sent) to the server 1004 where it is received at step 1018. Upon determining that the key sequence or the utterance match their pre-determined counterpart, i.e., upon determining that the response to the user identification request is correct, the server 1004 sends, at step 1020, a data item access option to the telephone 1000.

In cases where it is not required to identify the user of the telephone 1000, the sever 1004 can immediately send the data item access option to the telephone (step 1020) upon the call from the telephone 1000 to the MCD being directed to the server 1004 at step 1010.

The data item access option sent to the telephone 1000 at step 1020 need not be an explicit or spoken invitation to the user to select the data item access option. It can also be an implicit option, which assumes that the user of the telephone 1000 knows that the option is available, and knows what to do with such an option (for example, to press a pre-determined key sequence or to utter a pre-determined phrase such as, e.g., "data access"). As such, "sending a data item access option" can also be referred to as, or be understood to include, "enabling a data item access option".

At step 1022, the telephone 1000 receives the data item access option and, at step 1024, the data access option is selected. The selection of the data access option allows the user, through subsequent steps described below, to access one or more data items stored in a database (e.g., the data store 284 in Figure 4) operationally connected to server 1004. At step 1026, the server 1024 receives from the telephone 1000, the selection of the data access option and, in response to the selection, sends to the telephone 1000, at step 1028, at least one data item identification option to narrow the choice of retrievable data items. An example of data item identification options was described above in relation to the example of Figure 5, at the message 702, where caller (user of the telephone 1000) is presented with the options of selecting contacts, schedule or memo data.

Depending on the data item identification option selection made at the telephone 1000, the server 1004 can, in the case where the data item needs to be further identified before being accessible to the telephone 1000, receive from the telephone 1000 a selection of one of the options and, in response thereto, provide additional data item identification options to the telephone 1000. This is shown in Figure 7 as arrows 1031A and 1031 B. Upon receiving the selection in question (arrow 1031A), the server 1004 can send additional data item identification options, shown as arrow 1031 B, to which the telephone responds, and so on, until the data item to be accessed, or acted upon, is clearly identifiable. At the example of Figure 5, the selection of "contact" (1) in response the message 702 is an example of a selection of data item identification option that can be represented by arrow 1031A of Figure 7. Further, the message 704 of Figure 5 is an example of an additional data item identification option, that can be represented by arrow 1031B at Figure 7.

Once the data item to be accessed, or acted upon, has been made clearly identifiable, for example, at the message 708 in the example of Figure 5 where the data item to be accessed, or acted upon, is either "Contact, One, Telephone", "Contact, One, Address", or "Contact, One, email", a selection of the data item is made at step 1032 of Figure 7. As will be understood by the skilled worker, in other scenarios, any one of "Contact, One, Telephone", "Contact, One, Address", or "Contact, One, email" could require further identification in order to identify to the user of the telephone 1000 a data item that can be accessed, or acted upon. For example, if "Contact, One" had more than one telephone number, address, or email address, further data item identification options would have to be sent by the server 1004 to the telephone 1000 (step 1028), and selections received therefrom, before finally identifying the data item to be accessed or acted upon.

Upon the selection of the data item having been received at the server 1004, at step 1034, the server 1004 sends to the telephone 1000 one or more data item action options to be carried out on the identified data item. The telephone 1000 receives data item action options at step 1038 and identifies, at step 1040, a data item action option to be taken with the data item. Upon receiving from the telephone 1000, at step 1042, an identification of the data item action option at step, the server 1004 executes the identified action, also shown as occurring at step 1042. With reference to the example of Figure 5, data item action options are listed at the message 712. The options in questions are (1) to connect to the telephone number of "Contact, One", (2) to hear the telephone number of "Contact, One", and (3) to email the telephone number of "Contact, One".

The data item action options can include, for example, the server 1004 transmitting (sends) the data item from the database to which the server 1004 is operationally connected, to the telephone 1000. As another example, if the data item is a telephone number, the data item action options can include dialing the telephone number to establish communication (a communication connection) between the telephone and the party to which is associated the telephone number. Further examples of data item action options include: the server 1004 sending the data item from the database to the telephone 1000; the server 1000 sending the data item from the database to a telephone number; and the server 1004 sending the data item from the database to an email address. The server 1004 sending the data item from the database to the telephone 1000 can include the server 1004 spelling the data item or speaking the data item. The server 1004 sending the data item from the database to the telephone 1000 can includes sending the data item as text to be displayed on the telephone. The server 1004 sending the data item from the database to a telephone number or to an email address can preceded by, at the server 1004, retrieving the telephone number or the email address from the database.

As will be understood by the skilled worker, it is optional to have the data item access option step 1020 in order to be able to retrieve a data item from the database operationally connected to the server. In cases where it is not required to select the data item access option, the sever 1004 can immediately send the data item access option to the telephone (step 1020) upon the call from the telephone 1000 to the MCD being directed to the server 1004 at step 1010, or subsequent receiving valid identification data at step 1018.

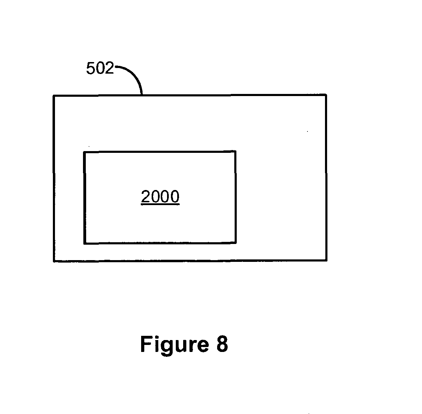

The VMDS 502 of Figure 4 can be described as having a transceiver that is operable to communicate with a telephone through a wireless network. Figure 8 shows the VMDS 502 which includes a transceiver 2000. The transceiver 2000 can, for example, receive a call from a telephone subsequent a failed attempt from the wireless network to establish communication between the telephone and a mobile communication device; send to the telephone at least one data item identification option; receive from the telephone, an identification of the data item; and, in response to the identification of the data item, send to the telephone at least one data item action option that includes sending (transmitting) the data item from the database to the telephone. As will be understood by the skilled worker, the transceiver 2000 can perform all the method steps described in relation to the server 1004 of the example of Figure 7.

Advantageously, the present disclosure enable the owner of an unavailable mobile communication device to access data items stored on the unavailable device by using another telephone device (e.g., another mobile communication device, landline telephone, or VolP telephone) to access a database that is synchronized with the mobile communication device in question, that is, a database includes a copy of the data items. To retrieve such data items, the user of the unavailable device can simply dial, using a borrowed or public telephone, the telephone number of the unavailable device and selects options from a menu to identify and access data items. For example, if a user is without use of his mobile communication device and needs to call an acquaintance at a telephone number he does not remember, but that is stored in a database that is synchronized with the unavailable mobile communication device, he can simply call the telephone number of his device (the unavailable device) to access, through a server, the database in question and obtain therefrom the acquaintance's telephone number. As a further advantage, the server can provide the caller the option (a data item action option) of connecting to acquaintance's telephone number without requiring the caller to have to dial the number himself. Additionally, the server can provide the caller the option to forward the telephone number, or, for that matter, any other data item stored in the database and identified to the server by the caller, to a third party. This can be achieved through, for example, an email, SMS, or MMS message. The addressee to which the email, SMS, or MMS message is to be sent can be entered by the caller by using, for example, the telephone keypad, or, if the addressee is listed in the database, by having the server retrieve the addressee from the database. Therefore, the present disclosure allows the owner of an unavailable mobile communication device to access securely, data items from a remote database synchronized with the unavailable mobile communication device, by using another telephone device to dial the telephone number of his mobile communication device.

In the preceding description, for purposes of explanation, numerous details are set forth in order to provide a thorough understanding of the embodiments of the disclosure. However, it will be apparent to one skilled in the art that these specific details are not required in order to practice the disclosure. In other instances, well-known electrical structures and circuits are shown in block diagram form in order not to obscure the disclosure. For example, specific details are not provided as to whether the embodiments of the disclosure described herein are implemented as a software routine, hardware circuit, firmware, or a combination thereof.

Embodiments of the disclosure can be represented as a software product stored in a machine-readable medium (also referred to as a computer-readable medium, a processor-readable medium, a computer-usable medium having a computer-readable program code embodied therein). The machine-readable medium can be any suitable tangible medium, including magnetic, optical, or electrical storage medium including a diskette, compact disk read only memory (CD-ROM), memory device (volatile or nonvolatile), or similar storage mechanism. The machine-readable medium can contain various sets of instructions, code sequences, configuration information, statements, or other data, which, when executed, cause a processor, or computer, to perform steps in a method according to an embodiment of the disclosure. Those of ordinary skill in the art will appreciate that other instructions and operations necessary to implement the described disclosure can also be stored on the machine-readable medium. Software running from the machine-readable medium can interface with circuitry to perform the described tasks.

The above-described embodiments of the disclosure are intended to be examples only. Alterations, modifications and variations can be effected to the particular embodiments by those of skill in the art without departing from the scope of the disclosure, which is defined solely by the claims appended hereto.

## Claims

1. A method to access a data item stored in a database, the database being operationally connected to a server, the server being operationally connected to a wireless network, the method comprising, at the server:
receiving a call for an unavailable mobile communication device, from a telephone (1011), subsequent a failed attempt from the wireless network to establish communication between the telephone and the unavailable mobile communication device, the data item stored in the database being a copy of a communication device data item stored in the unavailable mobile communication device;
sending to the telephone at least one data item identification option (1028);
receiving from the telephone, an identification of the data item (1034); and
in response to the identification of the data item, sending to the telephone at least one data item action option (1036).

2. The method of claim 1 wherein the at least one data item action includes one of:
sending the data item from the database to the telephone;
sending the data item from the database to a telephone number; and
sending the data item from the database to an email address.

3. The method of claim 2 wherein sending the data item from the database to the telephone includes one of spelling the data item and speaking the data item.

4. The method of claim 2 wherein sending the data item from the database to the telephone includes sending the data item as text to be displayed on the telephone.

5. The method of claim 2 wherein sending the data item from the database to a telephone number or to an email address is preceded by, at the server, receiving the telephone number or the email address from the telephone.

6. The method of claim 2 wherein sending the data item from the database to a telephone number or to an email address is preceded by, at the server, retrieving the telephone number or the email address from the database.

7. The method of claim 1 wherein sending to the telephone at least one data item identification option (1028) is preceded by, at the server:
in response to the call, sending to the telephone a data item access option (1020); and
receiving from the telephone, a selection of the data item access option (1026).

8. The method of claim 7 wherein sending to the telephone the data item access option includes sending at least one spoken data item access option selectable, at the telephone, through at least one of a pre-determined telephone key sequence and a voice command.

9. The method of claim 1 wherein sending to the telephone the at least one data item identification option (1028) includes sending at least one spoken data item identification option selectable, at the telephone, through at least one of a pre-determined telephone key sequence and a voice command.

10. The method of claim 1 wherein the data item is one of a contact name, a telephone number, an email address, a memo, a calendar event, and a task list.

11. The method of claim 2 wherein the data item is a telephone number and the at least one data item action option further includes, at the server, dialing the telephone number.

12. The method of claim 1 wherein sending to the telephone at least one data item identification option (1028) is preceded by, at the server,
sending to the telephone a user identification request (1012) to identify a user having permission to access the data item;
receiving a response to the user identification request (1018); and
determining the response to be correct.

13. A tangible computer readable medium having recorded thereon statements and instructions for execution by a computer of a method according to any of the preceding claims.

14. A server (502) operationally connected to a database (284) and to a wireless network (200), the database (284) containing a data item, the server (502) comprising:
a transceiver (2000) operable to:
receive a call for an unavailable mobile communication device, from a telephone subsequent a failed attempt from the wireless network to establish communication between the telephone and the unavailable mobile communication device, the data item contained in the database being a copy of a communication device data item stored in the unavailable mobile communication device;
send to the telephone at least one data item identification option;
receive from the telephone, an identification of the data item; and
in response to the identification of the data item, send to the telephone at least one data item action option.

15. The server of claim 14 wherein the transceiver (2000) is also operable to, before sending to the telephone at least one data item identification option:
send to the telephone a data item access option; and
receive from the telephone, a selection of the data item access option.

## Patentansprüche

1. Verfahren zum Zugreifen auf ein Datenelement, das in einer Datenbank gespeichert ist, wobei die Datenbank in Betrieb mit einem Server verbunden ist, wobei der Server in Betrieb mit einem Drahtlosnetz verbunden ist, wobei das Verfahren Folgendes aufweist, an dem Server:
Empfangen eines Anrufes an eine nicht erreichbare mobile Kommunikationsvorrichtung von einem Telefon (1011) anschließend an einen gescheiterten Versuch von dem Drahtlosnetz, eine Kommunikation zwischen dem Telefon und der nicht erreichbaren mobilen Kommunikationsvorrichtung herzustellen, wobei das Datenelement, das in der Datenbank gespeichert ist, eine Kopie eines Kommunikationsvorrichtungsdatenelements ist, das in der nicht erreichbaren mobilen Kommunikationsvorrichtung gespeichert ist,
Senden mindestens einer Datenelementidentifizierungsoption an das Telefon (1028);
Empfangen einer Identifizierung des Datenelements von dem Telefon (1034) und
Senden mindestens einer Datenelementaktionsoption als Reaktion auf die Identifizierung des Datenelements an das Telefon (1036).

2. Verfahren nach Anspruch 1, wobei die mindestens eine Datenelementaktion eines aus Folgendem aufweist:
Senden des Datenelements aus der Datenbank an das Telefon,
Senden des Datenelements aus der Datenbank an eine Telefonnummer und
Senden des Datenelements aus der Datenbank an eine E-Mail-Adresse.

3. Verfahren nach Anspruch 2, wobei das Senden des Datenelements aus der Datenbank an das Telefon eines aus Buchstabieren des Datenelements und Sprechen des Datenelements aufweist.

4. Verfahren nach Anspruch 2, wobei das Senden des Datenelements aus der Datenbank an das Telefon ein Senden des Datenelements als Text aufweist, der an dem Telefon anzuzeigen ist.

5. Verfahren nach Anspruch 2, wobei dem Senden des Datenelements aus der Datenbank an eine Telefonnummer oder an eine E-Mail-Adresse ein Empfangen der Telefonnummer oder der E-Mail-Adresse von dem Telefon an dem Server vorangeht.

6. Verfahren nach Anspruch 2, wobei dem Senden des Datenelements aus der Datenbank an eine Telefonnummer oder an eine E-Mail-Adresse ein Abrufen der Telefonnummer oder der E-Mail-Adresse von der Datenbank an dem Server vorangeht.

7. Verfahren nach Anspruch 1, wobei dem Senden mindestens einer Datenelementidentifizierungsoption an das Telefon (1028) Folgendes vorangeht, an dem Server:
Senden einer Datenelementzugriffsoption an das Telefon als Reaktion auf den Anruf (1020) und
Empfangen einer Auswahl der Datenelementzugriffsoption von dem Telefon (1026).

8. Verfahren nach Anspruch 7, wobei das Senden der Datenelementzugriffsoption an das Telefon ein Senden mindestens einer gesprochenen Datenelementzugriffsoption aufweist, die an dem Telefon durch mindestens eines aus einer vorbestimmten Telefontastenfolge und einem Sprachbefehl auswählbar ist.

9. Verfahren nach Anspruch 1, wobei das Senden der mindestens einen Datenelementidentifizierungsoption an das Telefon (1028) ein Senden mindestens einer gesprochenen Datenelementidentifizierungsoption aufweist, die an dem Telefon durch mindestens eines auf einer vorbestimmten Telefontastenfolge und einem Sprachbefehl auswählbar ist.

10. Verfahren nach Anspruch 1, wobei das Datenelement eines aus einem Kontaktnamen, einer Telefonnummer, einer E-Mail-Adresse, einer Anmerkung, einem Kalenderereignis und einer Aufgabenliste ist.

11. Verfahren nach Anspruch 2, wobei das Datenelement eine Telefonnummer ist und die mindestens eine Datenelementaktionsoption ferner ein Wählen der Telefonnummer an dem Server aufweist.

12. Verfahren nach Anspruch 1, wobei dem Senden mindestens einer Datenelementidentifizierungsoption an das Telefon (1028) Folgendes vorangeht, an dem Server:
Senden einer Benutzeridentifizierungsanfrage an das Telefon (1012), um einen Benutzer zu identifizieren, der eine Erlaubnis hat, auf das Datenelement zuzugreifen,
Empfangen einer Antwort auf die Benutzeridentifizierungsanfrage (1018) und
Bestimmen, dass die Antwort richtig ist.

13. Dinghaftes computerlesbares Medium, das darauf Angaben und Befehle zur Ausführung eines Verfahrens nach einem der vorhergehenden Ansprüche durch einen Computer aufgezeichnet hat.

14. Server (502), der im Betrieb mit einer Datenbank (284) und einem Drahtlosnetz (200) verbunden ist, wobei die Datenbank (284) ein Datenelement beinhaltet, wobei der Server (502) Folgendes aufweist:
einen Sende-Empfänger (2000), der dazu betriebsbereit ist:
einen Anruf an eine nicht erreichbare mobile Kommunikationsvorrichtung von einem Telefon anschließend an einen gescheiterten Versuch von dem Drahtlosnetz, eine Kommunikation zwischen dem Telefon und der nicht erreichbaren mobilen Kommunikationsvorrichtung herzustellen, zu empfangen, wobei das Datenelement, das in der Datenbank beinhaltet ist, eine Kopie eines Kommunikationsvorrichtungsdatenelements ist, das in der nicht erreichbaren mobilen Kommunikationsvorrichtung gespeichert ist,
an das Telefon mindestens eine Datenelementidentifizierungsoption zu senden;
von dem Telefon eine Identifizierung des Datenelements zu empfangen und
als Reaktion auf die Identifizierung des Datenelements an das Telefon mindestens eine Datenelementaktionsoption zu senden.

15. Server nach Anspruch 14, wobei der Sende-Empfänger (2000) auch dazu betriebsbereit ist, vor dem Senden mindestens einer Datenelementidentifizierungsoption an das Telefon:
an das Telefon eine Datenelementzugriffsoption zu senden und
von dem Telefon eine Auswahl der Datenelementzugriffsoption zu empfangen.

## Revendications

1. Procédé pour accéder à un élément de données stocké dans une base de données, la base de données étant connectée de manière fonctionnelle à un serveur, le serveur étant connecté de manière fonctionnelle à un réseau sans fil, le procédé comprenant, au niveau du serveur le fait :
de recevoir un appel pour un dispositif de communication mobile non disponible, à partir d'un téléphone (1011), à la suite d'une tentative échouée par le réseau sans fil pour établir une communication entre le téléphone et le dispositif de communication mobile non disponible, l'élément de données stocké dans la base de données étant une copie d'un élément de données de dispositif de communication stocké dans le dispositif de communication mobile non disponible ;
d'envoyer au téléphone au moins une option d'identification de l'élément de données (1028) ;
de recevoir à partir du téléphone, une identification de l'élément de données (1034) ; et
d'envoyer au téléphone au moins une option d'action de l'élément de données (1036), en réponse à l'identification de l'élément de données.

2. Procédé de la revendication 1, dans lequel l'au moins une action de l'élément de données comporte l'un parmi :
l'envoi de l'élément de données de la base de données au téléphone ;
l'envoi de l'élément de données de la base de données à un numéro de téléphone ; et
l'envoi de l'élément de données de la base de données à une adresse électronique.

3. Procédé de la revendication 2, dans lequel l'envoi de l'élément de données de la base de données au téléphone comporte l'une parmi l'épellation de l'élément de données et l'expression orale de l'élément de données.

4. Procédé de la revendication 2, dans lequel l'envoi de l'élément de données de la base de données au téléphone comporte l'envoi de l'élément de données sous forme de texte à afficher sur le téléphone.

5. Procédé de la revendication 2, dans lequel l'envoi de l'élément de données de la base de données à un numéro de téléphone ou à une adresse électronique est précédé, au niveau du serveur, de la réception du numéro de téléphone ou de l'adresse électronique à partir du téléphone.

6. Procédé de la revendication 2, dans lequel l'envoi de l'élément de données de la base de données à un numéro de téléphone ou à une adresse électronique est précédé, au niveau du serveur, de la récupération du numéro de téléphone ou de l'adresse électronique à partir de la base de données.

7. Procédé de la revendication 1, dans lequel l'envoi d'au moins une option d'identification de l'élément de données (1028) au téléphone est précédé, au niveau du serveur :
de l'envoi d'une option d'accès à l'élément de données (1020) au téléphone, en réponse à l'appel ; et
de la réception d'une sélection de l'option d'accès à l'élément de données (1026) à partir du téléphone.

8. Procédé de la revendication 7, dans lequel l'envoi de l'option d'accès à l'élément de données au téléphone comporte l'envoi d'au moins une option orale d'accès à l'élément de données pouvant être sélectionnée, au niveau du téléphone, par le biais d'au moins l'une parmi une séquence prédéterminée de touches de téléphone et une commande vocale.

9. Procédé de la revendication 1, dans lequel l'envoi d'au moins une option d'identification de l'élément de données (1028) au téléphone comporte l'envoi d'au moins une option orale d'identification de l'élément de données pouvant être sélectionnée, au niveau du téléphone, au moyen d'au moins l'une parmi une séquence prédéterminée de touches de téléphone et une commande vocale.

10. Procédé de la revendication 1, dans lequel l'élément de données est l'un d'un nom de contact, d'un numéro de téléphone, d'une adresse électronique, d'une note, d'un événement de calendrier et d'une liste de tâches.

11. Procédé de la revendication 2, dans lequel l'élément de données est un numéro de téléphone et l'au moins une option d'action de l'élément de données comporte en outre, au niveau du serveur, la composition du numéro de téléphone.

12. Procédé de la revendication 1, dans lequel l'envoi d'au moins une option d'identification de l'élément de données (1028) au téléphone est précédé, au niveau du serveur,
de l'envoi d'une demande d'identification de l'utilisateur (1012) au téléphone pour identifier un utilisateur ayant une autorisation pour accéder à l'élément de données ;
de la réception d'une réponse à la demande d'identification de l'utilisateur (1018) ; et
de la détermination selon laquelle la réponse est correcte.

13. Support tangible lisible par ordinateur ayant des déclarations et des instructions enregistrées sur celui-ci destinées à être exécutées par un ordinateur d'un procédé selon l'une des revendications précédentes.

14. Serveur (502) connecté de manière fonctionnelle à une base de données (284) et à un réseau sans fil (200), la base de données (284) contenant un élément de données, le serveur (502) comprenant :
un émetteur-récepteur (2000) pouvant fonctionner pour :
recevoir un appel pour un dispositif de communication mobile non disponible, à partir d'un téléphone à la suite d'une tentative échouée par le réseau sans fil pour établir une communication entre le téléphone et le dispositif de communication mobile non disponible, l'élément de données contenu dans la base de données étant une copie d'un élément de données de dispositif de communication stocké dans le dispositif de communication mobile non disponible ;
envoyer au moins une option d'identification de l'élément de données au téléphone ;
recevoir une identification de l'élément de données à partir du téléphone ; et
envoyer au moins une option d'action de l'élément de données au téléphone, en réponse à l'identification de l'élément de données.

15. Serveur de la revendication 14, dans lequel l'émetteur-récepteur (2000) peut également fonctionner, avant d'envoyer au moins une option d'identification de l'élément de données au téléphone, pour :
envoyer une option d'accès à l'élément de données au téléphone ; et
recevoir une sélection de l'option d'accès à l'élément de données à partir du téléphone.
